(19) Europäisches Patentamt
European Patent Office
Office européen des brevets

(11) Veröffentlichungsnummer : **0 073 958**
**B1**

# (12) EUROPÄISCHE PATENTSCHRIFT

(45) Veröffentlichungstag der Patentschrift : **09.10.85**

(51) Int. Cl.⁴ : **C 09 B 29/01** // D06P1/06

(21) Anmeldenummer : **82107413.5**

(22) Anmeldetag : **16.08.82**

## (54) Saure Monoazofarbstoffe und deren Verwendung zum Färben von Polyamidfasern.

(30) Priorität : **27.08.81 DE 3133915**

(43) Veröffentlichungstag der Anmeldung : **16.03.83 Patentblatt 83/11**

(45) Bekanntmachung des Hinweises auf die Patenterteilung : **09.10.85 Patentblatt 85/41**

(84) Benannte Vertragsstaaten : **CH DE FR GB LI**

(56) Entgegenhaltungen :
**DE-A- 2 263 295**
**FR-A- 2 112 478**
**FR-A- 2 121 860**
**FR-A- 2 161 112**
**FR-A- 2 197 944**
**FR-A- 2 236 902**
**FR-A- 2 251 604**
**Die Akte enthält technische Angaben, die nach dem Eingang der Anmeldung eingereicht wurden und die nicht in dieser Patentschrift enthalten sind.**

(73) Patentinhaber : **BAYER AG**
**Konzernverwaltung RP Patentabteilung**
**D-5090 Leverkusen 1 Bayerwerk (DE)**

(72) Erfinder : **Wolfrum, Gerhard, Dr.**
**Domblick 17**
**D-5090 Leverkusen 3 (DE)**
Erfinder : **Hugl, Herbert, Dr.**
**Gemarkenweg 9**
**D-5060 Bergisch-Gladbach 2 (DE)**
Erfinder : **Heidenreich, Holger, Dr.**
**Andreas-Gryphius-Strasse 22**
**D-5000 Köln 80 (DE)**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

EP 0 073 958 B1

**Beschreibung**

Gegenstand der Erfindung sind Azofarbstoffe der Formel

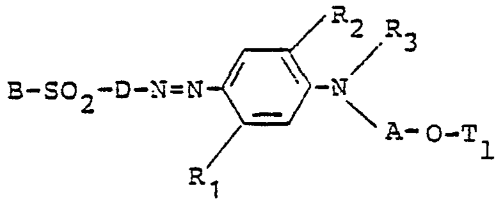

(I)

worin

A einen Alkylenrest,

B einen Rest der Formeln —OH, —$NHSO_2R$ oder

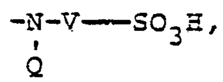

D den Rest einer Diazokomponente der Benzol- oder Naphthalinreihe,

Q Wasserstoff oder einen Alkylrest,

V einen Alkylen- oder Arylenrest,

R einen Alkyl- oder Arylrest,

$T_1$ einen Cycloalkyl-, Aralkyl- oder — vorzugsweise — Arylrest,

$R_1$ Wasserstoff, Halogen, einen Alkyl-, Alkoxy- oder Acylaminorest,

$R_2$ Wasserstoff, Halogen, einen Alkyl-, Alkoxy- oder Aryloxyrest und

$R_3$ Wasserstoff, Alkyl, Cycloalkyl oder Aralkyl

bedeuten, mit der Maßgabe, daß die genannten nicht näher charakterisierten Kohlenwasserstoffreste, insbesondere die Reste $R_3$ und D, weitere in der Chemie der Säurefarbstoffe übliche Substituenten enthalten können.

Der oben im Zusammenhang mit der Acylaminogruppe verwendete Ausdruck « Acyl » soll im weitesten Sinne, d. h. als Rest einer Säure verstanden werden. Bevorzugte Acylreste sind Alkyl(Aryl, Alkoxy)-carbonyl- und Alkyl(Aryl)-sulfonylreste.

Geeignete im beliebigen Zusammenhang genannte Alkylreste sind solche mit 1-4 C-Atomen, wobei insbesondere der Rest $R_3$ weitersubstituiert sein kann, z. B. durch Halogen, OH, CN, Alkoxy oder Alkylcarbonyloxy.

Geeignetes Aryl ist insbesondere gegebenenfalls 1 bis 3 mal durch Halogen, $C_1$-$C_4$-Alkyl, $C_1$-$C_4$-Alkoxy oder einmal durch Nitro substituiertes Phenyl.

Geeignete Substituenten in D sind beispielsweise $CH_3$, $OCH_3$, Cl oder $CF_3$. Bevorzugt sind 1-2 Chloratome.

« Sperrige » Reste befinden sich in solchen Positionen, wo sie keine sterische Hinderung bewirken, z. B. tert.-Butyl in m- oder p-Stellung eines Phenylrestes.

Geeignetes Halogen ist Chlor, Brom, Fluor vorzugsweise aber Chlor.

Geeignetes Alkoxy ist z. B. $C_1$-$C_4$-Alkoxy. Geeignetes Aryloxy ist Phenoxy.

Geeignetes Aralkyl ist beispielsweise Benzyl oder Phenethyl.

Geeignetes Cycloalkyl ist beispielsweise Cyclopentyl, Cyclohexyl und Cycloheptyl.

Bevorzugte Farbstoffe sind solche der Formel I,

worin

A $C_2$-$C_4$-Alkylen,

$R_1$ H, $CH_3$, Cl, $NHCOCH_3$ oder $NHSO_2CH_3$,

$R_2$ H, $OCH_3$ oder Cl,

$R_3$ H, $C_1$-$C_4$-Alkyl, $C_2$-$C_4$-Hydroxyalkyl, Cyanethyl, $C_2H_4$-O-Q, Benzyl oder Phenethyl,

Q $C_1$-$C_4$-Alkyl, Phenyl oder Cyclohexyl,

$T_1$ Phenyl, Tolyl, Chlorphenyl oder Cyclohexyl,

D gegebenenfalls 1 bis 2 mal durch Cl, $CF_3$, $CH_3$ oder $OCH_3$, substituiertes Phenylen und

B OH oder $NHC_2H_4SO_3H$ bedeuten.

Ganz besonders bevorzugt sind Farbstoffe der Formel

I, worin

A $CH_2H_4$,

$R_1$ H oder $CH_3$,

$R_2$ H,

$R_3$ H, $C_2H_5$, $C_2H_4OH$, $C_2H_4CN$ Benzyl, Phenethyl oder $C_2H_4OQ$,

Q $C_1$-$C_4$-Alkyl,

$T_1$ Phenyl oder Cyclohexyl,

D 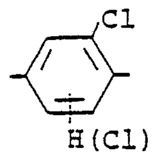 oder 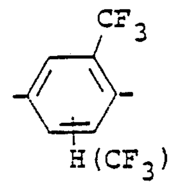 und

B OH oder $NHC_2H_4SO_3H$ bedeuten.

Die neuen Farbstoffe werden in an sich bekannter Weise, z. B. durch Diazotieren und Kuppeln entsprechender Komponenten hergestellt.

Die Diazo- und Kupplungskomponenten sind bekannt bzw. in an sich bekannter Weise leicht zugänglich und beispielsweise in folgender Patentliteratur beschrieben :

US-PS 4 048 154, 4 231 748, 4 248 774, 4 055 557, 4 000 124, 3 891 619, 3 657 220, 3 449 319, 3 852 263, 2 266 142,

GB-PS 1 325 147, 1 384 472, 1 422 065 und 2 006 252.

Die neuen Farbstoffe eignen sich zum Färben von amidgruppenhaltigen Fasern, wie z. B. Wolle, Seide und vor allen synthetischen Polyamiden. Die erhaltenen Färbungen zeichnen sich durch hervorragende anwendungstechnische Eigenschaften, insbesondere durch ein gutes Migriervermögen und hohe Lichtechtheiten aus.

Nächstvergleichbaren Farbstoffen aus FR-A 2 236 902, 2 251 604, 2 264 295 und 2 121 860 sind die erfindungsgemäßen Farbstoffe hinsichtlich des Neutralziehvermögens und der Schweißechtheit überlegen.

Beispiel 1

0,1 Mol = 34,9 g N-(4-Amino-2,5-dichlorphenylsulfonyl)-aminoethansulfonsäure werden in 300 ml Wasser mit etwa 20 %iger Natronlauge so gelöst, daß die Lösung pH 7 hat. Zu dieser Lösung gibt man 7 g Natriumnitrit und rührt bis zur vollständigen Lösung. Dann wird diese Lösung auf 0° bis 5 °C abgekühlt und ziemlich rasch in die Mischung aus 300 ml 37 %ige Salzsäure und 100 g Eis eingetropft, wobei für gute Rührung zu sorgen ist. Nach ca. 15 Minuten wird ein geringer Uberschuß als salpetriger Säure mit etwas Amidosulfonsäure zerstört. Dann gibt man zu der so hergestellten Diazolösung die Lösung von 0,101 Mol = 26,4 g 3-[(N-Ethyl-N-2′-cyclohexyl-oxy-ethyl)-amino]-toluol in 180 ml 50 %iger Essigsäure und stellt durch Zugabe von gesättigter Natriumacetatlösung einen pH-Wert von ca. 4-5 ein. Die Kupplung ist nach ca. 1-2 Stunden beendet. Der ausgeschiedene Farbstoff wird abfiltriert und getrocknet. Er entspricht der Formel

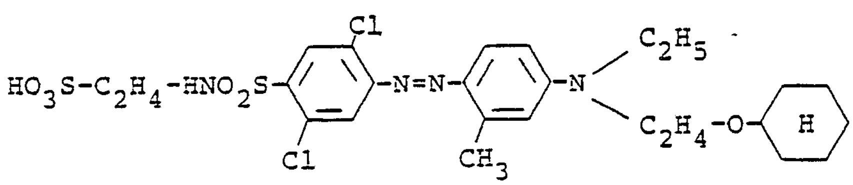

0,1 g dieses Farbstoffs werden in 100 ml Wasser heiß gelöst, 5 ml 10 %ige Ammoniumacetatlösung zugesetzt und auf ein Volumen von 500 ml mit Wasser verdünnt. Man geht mit 10 g Polyamidgarn in das Färbebad ein, bringt das Färbebad innerhalb von 20 Minuten zum Kochen, setzt 4 ml 10 %ige Essigsäure zu und hält eine Stunde auf Kochtemperatur. Danach wird das Polyamidgarn herausgenommen, mit Wasser mehrfach gespült und bei 70-80 °C getrocknet. Man erhält ein leuchtend gelbstichig rot gefärbtes Polyamidgarn. Die Färbung zeichnet sich durch gute Echtheiten aus.

Beispiel 2

0,1 Mol = 39,7 g 2,5-Dichlor-anilin-4-sulfonsäure-(3′-sulfophenyl)-amid werden analog der Diazotierungsvorschrift in Beispiel 1 diazotiert und die Diazolösung zur Lösung von 0,101 Mol = 22,9 g 3-[N-2′-Phenoxy-ethyl)-amino]-toluol in 50 %iger Essigsäure gegeben. Die Kupplung wird bei pH 4-5 zu Ende geführt. Man erhält einen Farbstoff der Formel

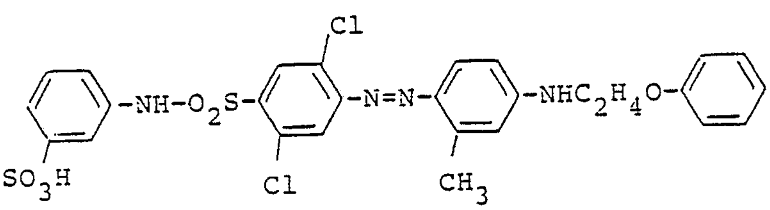

Dieser Farbstoff färbt Polyamidfasern in einem klaren gelbstichig Rot mit guten Echtheiten.

Setzt man die in der folgenden Tabelle aufgeführten Diazokomponenten I mit den Kupplungskomponenten II um, so erhält man ebenfalls erfindungsgemäße Farbstoffe, die Polyamid in den angegebenen Tönen färben :

II: 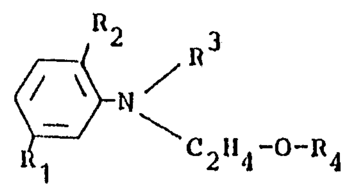

| Beispiel | I | $R_1$ | $R_2$ | $R_3$ | $R_4$ | Farbton |
|---|---|---|---|---|---|---|
| 1 | 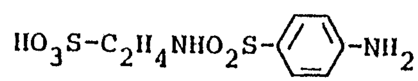 | $CH_3$ | H | $C_2H_5$ | $C_6H_9$ | Gelb |
| 2 | 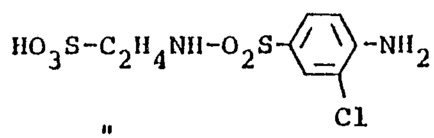 | H | H | $CH_3$ | $-C_6H_5$ | Gelb |
| 3 | " | $CH_3$ | H | $C_2H_5$ | $-C_6H_5$ | Gelb |
| 4 | " | $CH_3$ | H | H | $-C_6H_5$ | Gelb |
| 5 | " | $CH_3$ | H | H | Cyclo-hexyl | Gelb |
| 6 | " | $CH_3$ | $OCH_3$ | $C_2H_5$ | $C_6H_5$ | rotst. Gelb |
| 7 | " | H | $OCH_3$ | $C_2H_5$ | $C_6H_5$ | rotst. Gelb |
| 8 | " | $OCH_3$ | $OCH_3$ | $C_2H_5$ | $C_6H_5$ | Orange |
| 9 | " | $OCH_3$ | $OCH_3$ | Cyclo-hexyl | Cyclo-hexyl | Orange |
| 10 | " | Cl | H | $CH_3$ | Cyclo-hexyl | rotst. Gelb |

II: 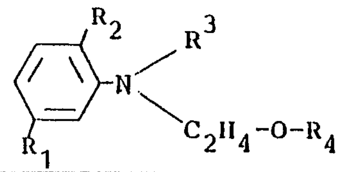

| Beispiel | I | $R_1$ | $R_2$ | $R_3$ | $R_4$ | Farbton |
|---|---|---|---|---|---|---|
| 11 | $HO_3S-C_2H_4NH-O_2S-$ 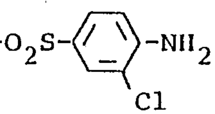 | $NHCOCH_3$ | H | $C_2H_5$ | Cyclo-hexyl | rotst. Gelb |
| 12 | " | $NHCOCH_3$ | $OCH_3$ | $C_2H_5$ | Cyclo-hexyl | gelbst. Rot |
| 13 | " | $CH_3$ | H | $C_2H_5$ | $C_6H_4Cl$ (m) | Gelb |
| 14 | " | $CH_3$ | H | $C_6H_5$ | $C_6H_5$ | Orange |
| 15 | $HO_3S-C_2H_4NH-O_2S-$ 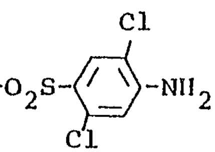 | H | H | $CH_3$ | $C_6H_5$ | Orange |
| 16 | " | $CH_3$ | H | $C_2H_5$ | $C_6H_5$ | gelbst. Rot |
| 17 | " | $CH_3$ | H | H | $C_6H_5$ | gelbst. Rot |
| 18 | " | $CH_3$ | H | H | Cyclo-hexyl | gelbst. Rot |

II: 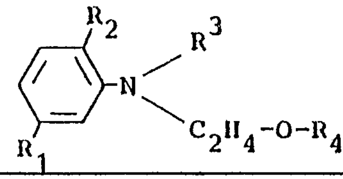

| Beispiel | I | $R_1$ | $R_2$ | $R_3$ | $R_4$ | Farbton |
|---|---|---|---|---|---|---|
| 19 | 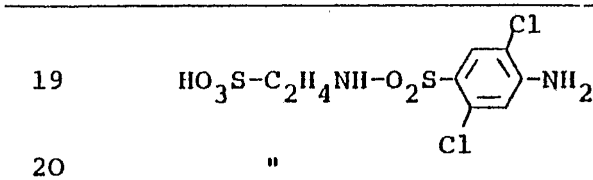 | $CH_3$ | $OCH_3$ | $C_2H_5$ | $C_6H_5$ | Rot |
| 20 | " | H | $OCH_3$ | $C_2H_5$ | $C_6H_5$ | Rot |
| 21 | " | $OCH_3$ | $OCH_3$ | $C_2H_5$ | $C_6H_5$ | Rot |
| 22 | " | $OCH_3$ | $OCH_3$ | Cyclo-hexyl | Cyclo-hexyl | Rot |
| 23 | " | Cl | H | $CH_3$ | Cyclo-hexyl | Rot |
| 24 | " | $NHCOCH_3$ | H | $C_2H_5$ | Cyclo-hexyl | Rot |
| 25 | " | $NHCOCH_3$ | $OCH_3$ | $C_2H_5$ | Cyclo-hexyl | Rot |
| 26 | " | $CH_3$ | H | $C_2H_5$ | $C_6H_4Cl$(p) | rotst. Orange |

II: 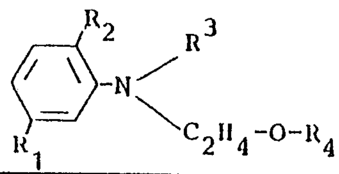

| Beispiel | I | $R_1$ | $R_2$ | $R_3$ | $R_4$ | Farbton |
|---|---|---|---|---|---|---|
| 27 | $HO_3S-C_2H_4NH-O_2S-$ 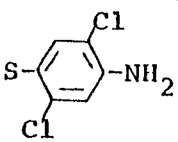 | $CH_3$ | H | $C_6H_5$ | $C_6H_5$ | gelbst. Rot |
| 28 | " | $CH_3$ | H | $C_2H_5$ | Cyclo-. pentyl | rotst. Orange |
| 29 | " | $CH_3$ | H | $C_2H_5$ | $C_6H_5$ | gelbst. Orange |
| 30 | " | $CH_3$ | H | $C_2H_5$ | Cyclo- hexyl | gelbst. Orange |
| 31 | " | $CH_3$ | H | $C_2H_5$ | Cyclo- pentyl | gelbst. Orange |

II: 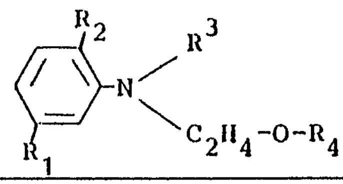

| Beispiel | I | $R_1$ | $R_2$ | $R_3$ | $R_4$ | Farbton |
|---|---|---|---|---|---|---|
| 32 | " | $CH_3$ | $OCH_3$ | $C_2H_5$ | $C_6H_5$ | Orange |
| 33 | | $CH_3$ | $OCH_3$ | $C_2H_5$ | $C_6H_4Cl$ (p) | Orange |
| 34 | " | $CH_3$ | $OCH_3$ | $C_2H_5$ | $C_6H_4CH_3$ (p) | Orange |
| 35 | " | $CH_3$ | $OCH_3$ | $C_2H_5$ | Cyclo-hexyl | Orange |
| 36 | " | $OCH_3$ | H | $C_2H_5$ | $C_6H_5$ | Orange |
| 37 | " | $OCH_3$ | H | $C_2H_5$ | Cyclo-hexyl | Orange |

II: 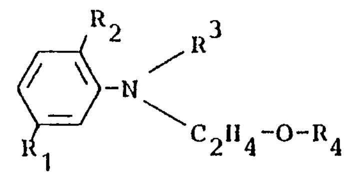

| Beispiel | I | $R_1$ | $R_2$ | $R_3$ | $R_4$ | Farbton |
|---|---|---|---|---|---|---|
| 38 | 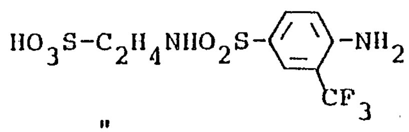 | $OCH_3$ | $OCH_3$ | $C_2H_5$ | $C_6H_5$ | Rot |
| 39 | " | $OCH_3$ | $OCH_3$ | $C_2H_5$ | Cyclo-hexyl | Rot |
| 40 | " | $NHCOCH_3$ | H | $C_2H_5$ | $C_6H_5$ | Rot |
| 41 | " | $NHCOCH_3$ | H | $C_2H_5$ | Cyclo-hexyl | Rot |
| 42 | 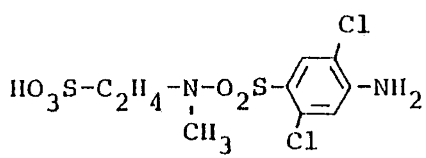 | $CH_3$ | H | $C_2H_5$ | $C_6H_5$ | gelbst. Rot |
| 43 | " | $CH_3$ | $OCH_3$ | $C_2H_5$ | $C_6H_5$ | Rot |
| 44 | " | $CH_3$ | H | $C_2H_5$ | Cyclo-hexyl | gelbst. Rot |

II: 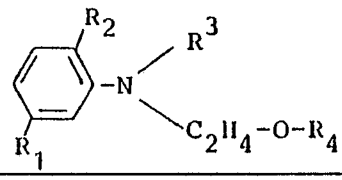

| Beispiel | I | $R_1$ | $R_2$ | $R_3$ | $R_4$ | Farbton |
|---|---|---|---|---|---|---|
| 45 | 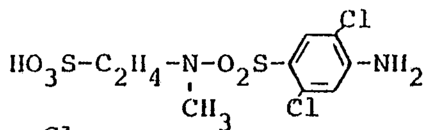 | $CH_3$ | $CH_3$ | $C_2H_5$ | Cyclo-hexyl | Gelbst. Rot |
| 46 | 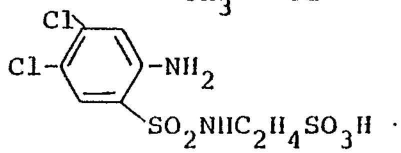 | H | H | $CH_3$ | $C_6H_5$ | Orange |
| 47 | " | $CH_3$ | H | $C_2H_5$ | $C_6H_5$ | rotst. Orange |
| 48 | " | $CH_3$ | H | $C_2H_5$ | Cyclo-hexyl | gelbst. Rot |
| 49 | " | $NHCOCH_3$ | H | $C_2H_5$ | $C_6H_5$ | gelbst. Rot |
| 50 | " | $NHCOCH_3$ | H | $C_2H_5$ | Cyclo-hexyl | gelbst. Rot |
| 51 | 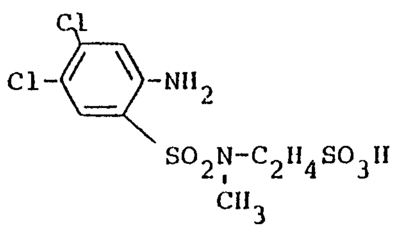 | $CH_3$ | H | $C_2H_5$ | $C_6H_5$ | rotst. Orange |

II: 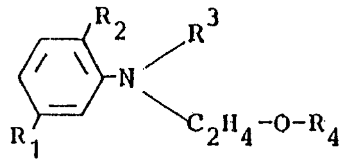

| Beispiel | I | $R_1$ | $R_2$ | $R_3$ | $R_4$ | Farbton |
|---|---|---|---|---|---|---|
| 52 | 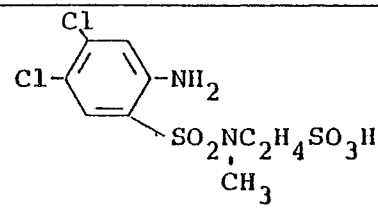 | $CH_3$ | H | $C_2H_5$ | Cyclo-hexyl | Rotst. Orange |
| 53 | " | $CH_3$ | H | $C_2H_5$ | $C_6H_5$ | Gelb |
| 54 | " | $CH_3$ | H | $C_2H_5$ | Cyclo-hexyl | Gelb |
| 55 | 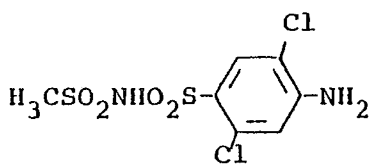 | $CH_3$ | H | H | $C_6H_5$ | gelbst. Rot |
| 56 | " | $CH_3$ | H | $C_2H_5$ | $C_6H_5$ | gelbst. Rot |
| 57 | " | $CH_3$ | H | Cyclo-hexyl | Cyclo-hexyl | gelbst. Rot |

II: 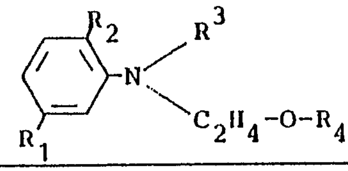

| Beispiel | I | $R_1$ | $R_2$ | $R_3$ | $R_4$ | Farbton |
|---|---|---|---|---|---|---|
| 58 | 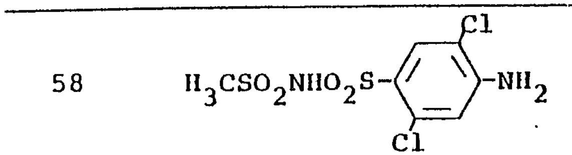 | $CH_3$ | H | $C_6H_5$ | $C_6H_5$ | gelbst. Rot |
| 59 | " | $CH_3$ | H | $C_2H_5$ | Cyclo-hexyl | gelbst. Rot |
| 60 | " | $CH_3$ | H | $C_2H_5$ | $C_6H_4Cl$ (p) | gelbst. Rot |
| 61 | " | $CH_3$ | H | $C_2H_5$ | $C_6H_4CH_3$ (p) | gelbst. Rot |
| 62 | 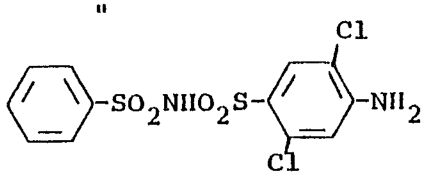 | H | H | H | $C_6H_5$ | gelbst. Rot |
| 63 | " | H | H | H | Cyclo-hexyl | gelbst. Rot |

II: 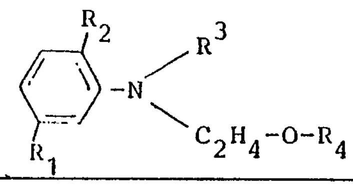

| Beispiel | I | $R_1$ | $R_2$ | $R_3$ | $R_4$ | Farbton |
|---|---|---|---|---|---|---|
| 64 | 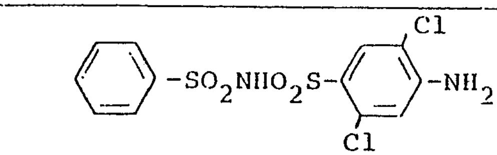 | $CH_3$ | H | $C_2H_5$ | Cyclo-hexyl | rotst. Orange |
| 65 | " | $CH_3$ | H | $C_2H_5$ | $C_6H_4Cl$ (p) | gelbst. Rot |
| 66 | " | $CH_3$ | H | $C_2H_5$ | $C_6H_4CH_3$ (p) | gelbst. Rot |
| 67 | " | $NHCOCH_3$ | H | $C_2H_5$ | $C_6H_5$ | Rot |
| 68 | " | $NHCOCH_3$ | H | $C_2H_5$ | Cyclo-hexyl | Rot |
| 69 | " | $NHCOCH_3$ | H | $C_2H_5$ | Cyclo-hexyl | Rot |
| 70 | " | $CH_3$ | H | $C_2H_5$ | $C_6H_5$ | Rot |

II: 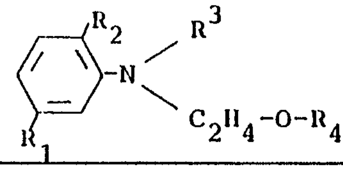

| Beispiel | I | $R_1$ | $R_2$ | $R_3$ | $R_4$ | Farbton |
|---|---|---|---|---|---|---|
| 71 | 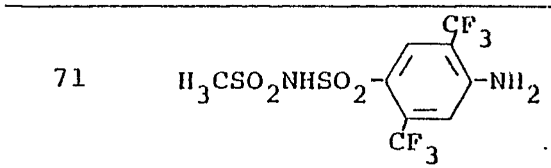 | $CH_3$ | H | $C_2H_5$ | Cyclo-hexyl | Rot |
| 72 | " | $NHCOCH_3$ | H | $C_2H_5$ | Cyclo-hexyl | Rot |
| 73 | " | $NHCOCH_3$ | $OCH_3$ | $C_2H_5$ | Cyclo-hexyl | blaust. Rot |
| 74 | 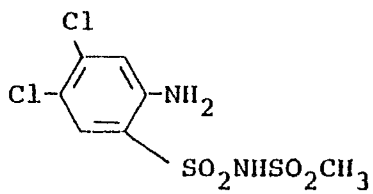 | $CH_3$ | H | $C_2H_5$ | $C_6H_5$ | rotst. Orange |
| 75 | " | $CH_3$ | H | $C_2H_5$ | Cyclo-hexyl | rotst. Orange |

II: 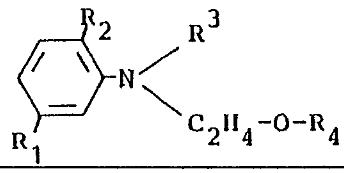

| Beispiel | I | $R_1$ | $R_2$ | $R_3$ | $R_4$ | Farbton |
|---|---|---|---|---|---|---|
| 76 | 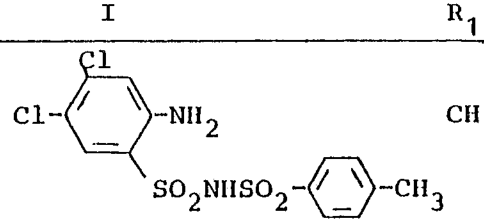 | $CH_3$ | H | $C_2H_5$ | $C_6H_5$ | rotst. Orange |
| 77 | " | $CH_3$ | H | $C_2H_5$ | Cyclo-hexyl | rotst. Orange |
| 78 | " | $NHCOCH_3$ | H | $C_2H_5$ | $C_6H_5$ | Scharlach |
| 79 | " | $NHCOCH_3$ | H | $C_2H_5$ | Cyclo-hexyl | Scharlach |
| 80 | " | H | $OCH_3$ | $C_2H_5$ | $C_6H_5$ | gelbst. Rot |
| 81 | " | $CH_3$ | $OCH_3$ | $C_2H_5$ | $C_6H_5$ | Rot |
| 82 | 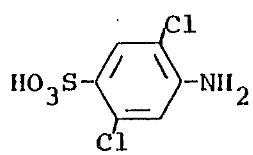 | H | H | $CH_3$ | $C_6H_5$ | Orange |

II: 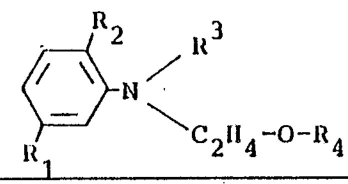

| Beispiel | I | $R_1$ | $R_2$ | $R_3$ | $R_4$ | Farbton |
|---|---|---|---|---|---|---|
| 83 | 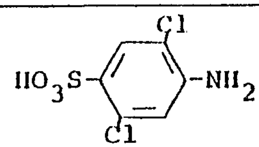 | H | H | $CH_3$ | $C_6H_4Cl$ (p) | Orange |
| 84 | " | H | H | $CH_3$ | $C_6H_4CH_3$ (p) | Orange |
| 85 | " | H | H | $CH_3$ | $C_6H_4Cl_2$ (o,p) | Orange |
| 86 | " | $CH_3$ | H | $C_2H_5$ | $C_6H_5$ | gelbst. Rot |
| 87 | " | $CH_3$ | H | $C_2H_5$ | $C_6H_4Cl$ (p) | gelbst. Rot |
| 88 | " | $CH_3$ | H | $C_2H_5$ | $C_6H_3Cl_2$ (o,p) | gelbst. Rot |
| 89 | " | $CH_3$ | H | $C_2H_5$ | $C_6H_4CH_3$ (p) | gelbst. Rot |
| 90 | " | $CH_3$ | H | $C_2H_5$ | Cyclopentyl | gelbst. Rot |

II: 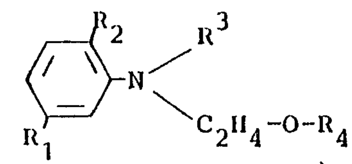

| Beispiel | I | $R_1$ | $R_2$ | $R_3$ | $R_4$ | Farbton |
|---|---|---|---|---|---|---|
| 91 | 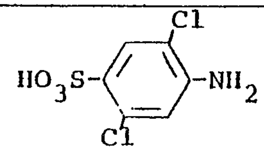 | $CH_3$ | H | $C_2H_5$ | Cyclo-hexyl | gelbst. Rot |
| 92 | " | $NHCOCH_3$ | H | $C_2H_5$ | $C_6H_5$ | Scharlach |
| 93 | " | $CH_3$ | $CH_3$ | $C_2H_5$ | $C_6H_5$ | gelbst. Rot |
| 94 | " | $CH_3$ | $OCH_3$ | $C_2H_5$ | $C_6H_5$ | Rot |
| 95 | " | H | $OCH_3$ | $C_2H_5$ | $C_6H_5$ | Rot |
| 96 | 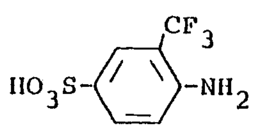 | $CH_3$ | H | $C_2H_5$ | $C_6H_5$ | rotst. Gelb |
| 97 | " | $CH_3$ | H | $C_2H_5$ | Cyclo-hexyl | rotst. Gelb |
| 98 | " | $CH_3$ | H | $C_2H_4CN$ | $C_6H_5$ | rotst. Gelb |

II: 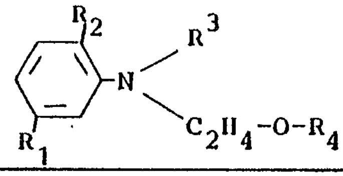

| Beispiel | I | $R_1$ | $R_2$ | $R_3$ | $R_4$ | Farbton |
|---|---|---|---|---|---|---|
| 99 | 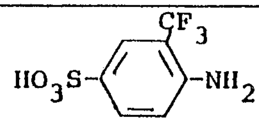 | $CH_3$ | H | $C_2H_4COOCH_3$ | $C_6H_5$ | rotst. Gelb |
| 100 | " | $CH_3$ | H | $C_2H_4OH$ | $C_6H_5$ | rotst. Gelb |
| 101 | 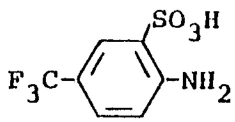 | $CH_3$ | H | $C_2H_5$ | $C_6H_5$ | rotst. Gelb |
| 102 | " | $CH_3$ | H | $C_2H_5$ | Cyclo-hexyl | rotst. Gelb |
| 103 | " | $CH_3$ | H | $C_2H_5$ | $n-C_4H_9$ | rotst. Gelb |
| 104 | " | $NHCOCH_3$ | H | $C_2H_5$ | $C_6H_5$ | Orange |
| 105 | " | $CH_3$ | $CH_3$ | $C_2H_5$ | $C_6H_5$ | gelbst. Orange |

II: 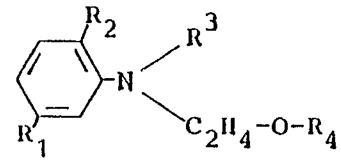

| Beispiel | I | $R_1$ | $R_2$ | $R_3$ | $R_4$ | Farbton |
|---|---|---|---|---|---|---|
| 106 | 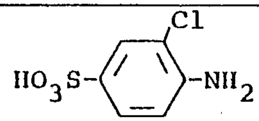 | $CH_3$ | H | $C_2H_5$ | $C_6H_5$ | rotst. Gelb |
| 107 | " | $CH_3$ | H | $C_2H_5$ | Cyclo-hexyl | rotst. Gelb |
| 108 | " | $CH_3$ | H | $C_2H_5$ | $C_6H_4$ (p) | rotst. Gelb |
| 109 | " | $CH_3$ | H | $C_2H_5$ | $C_6H_4CH_3$ (p) | rotst. Gelb |
| 110 | " | $CH_3$ | H | $C_2H_4CN$ | $C_6H_5$ | rotst. Gelb |
| 111 | " | $CH_3$ | H | $C_2H_4OH$ | $C_6H_5$ | rotst. Gelb |
| 112 | " | $CH_3$ | H | $C_2H_4COOCH_3$ | $C_6H_5$ | rotst. Gelb |
| 113 | 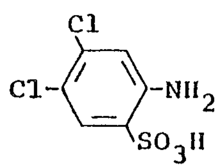 | $CH_3$ | H | $C_2H_5$ | $C_6H_5$ | rotst. Gelb |

II: 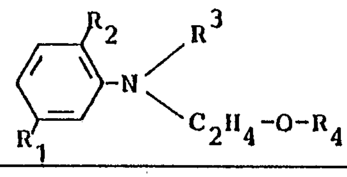

| Beispiel | I | $R_1$ | $R_2$ | $R_3$ | $R_4$ | Farbton |
|---|---|---|---|---|---|---|
| 114 | 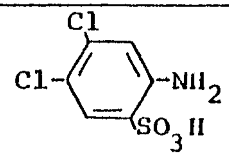 | $CH_3$ | H | $C_2H_5$ | Cyclo-hexyl | rotst. Gelb |
| 115 | " | $CH_3$ | H | $C_2H_5$ | $C_6H_5$ | Gelb |
| 116 | " | $CH_3$ | H | $C_2H_5$ | Cyclo-hexyl | Gelb |
| 117 | " | $CH_3$ | H | $C_2H_5$ | $C_6H_5$ | Gelb |
| 118 | " | $CH_3$ | H | $C_2H_5$ | Cyclo-hexyl | Gelb |

II: 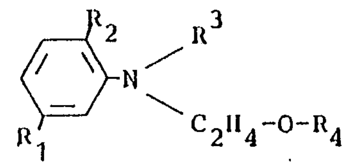

| Beispiel | I | $R_1$ | $R_2$ | $R_3$ | $R_4$ | Farbton |
|---|---|---|---|---|---|---|
| 119 | 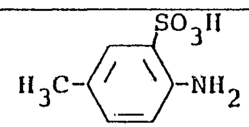 | $NHCOCH_3$ | H | $C_2H_5$ | $C_6H_5$ | rotst. Gelb |
| 120 | " | $NHCOCH_3$ | H | $C_2H_5$ | Cyclo-hexyl | rotst. Gelb |
| 121 | 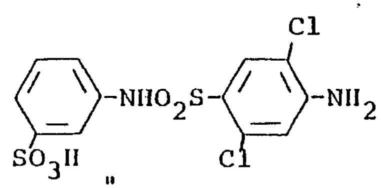 | $CH_3$ | H | $C_2H_5$ | $C_6H_5$ | gelbst. Rot |
| 122 | " | $CH_3$ | H | $C_2H_5$ | $C_6H_4Cl$ (p) | gelbst. Rot |
| 123 | " | $CH_3$ | H | $C_2H_5$ | $C_6H_4CH_3$ (p) | gelbst. Rot |
| 124 | " | $CH_3$ | H | $C_2H_5$ | Cyclo-hexyl | gelbst. Rot |
| 125 | " | H | $OCH_3$ | $C_2H_5$ | $C_6H_5$ | Rot |
| 126 | " | $CH_3$ | $OCH_3$ | $C_2H_5$ | $C_6H_5$ | Rot |

II: 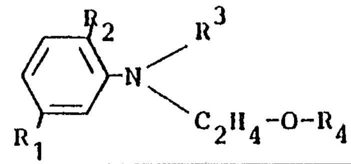

| Beispiel | I | $R_1$ | $R_2$ | $R_3$ | $R_4$ | Farbton |
|---|---|---|---|---|---|---|
| 127 | 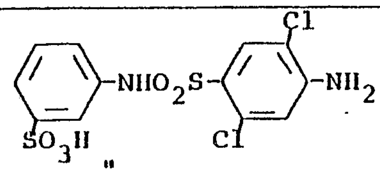 | $OCH_3$ | $OCH_3$ | $C_2H_5$ | $C_6H_5$ | Rot |
| 128 | " | $NHCOCH_3$ | $OCH_3$ | $C_2H_5$ | $C_6H_5$ | Rot |
| 129 | " | $NHCOCH_3$ | H | $C_2H_5$ | $C_6H_5$ | Rot |
| 130 | " | Cl | H | $C_2H_5$ | $C_6H_5$ | rotst. Orange |
| 131 | 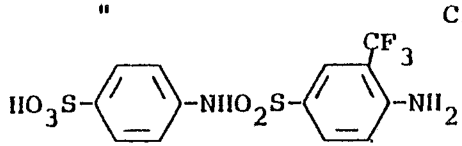 | $CH_3$ | H | $C_2H_5$ | $C_6H_5$ | Rot |
| 132 | " | $CH_3$ | H | $C_2H_5$ | Cyclo-hexyl | Rot |

II: 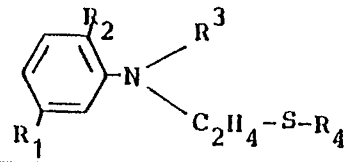

| Beispiel | I | $R_1$ | $R_2$ | $R_3$ | $R_4$ | Farbton |
|---|---|---|---|---|---|---|
| 133 | 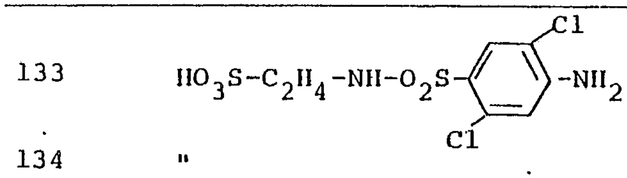 | H | H | $C_2H_5$ | $C_6H_5$ | rotst. Orange |
| 134 | " | $CH_3$ | H | $C_2H_5$ | $C_6H_5$ | gelbst. Rot |
| 135 | " | $CH_3$ | H | $C_2H_5$ | Cyclo-hexyl | gelbst. Rot |
| 136 | 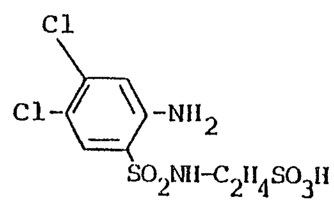 | $CH_3$ | H | $C_2H_5$ | $C_6H_5$ | Orange |
| 137 | " | $NHCOCH_3$ | H | $C_2H_5$ | $C_6H_5$ | Rot |
| 138 | 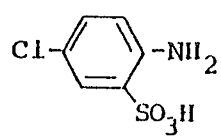 | $CH_3$ | H | $C_2H_5$ | $C_6H_5$ | rotst. Gelb |

II: 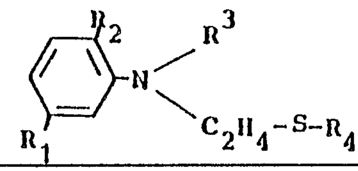

| Beispiel | I | $R_1$ | $R_2$ | $R_3$ | $R_4$ | Farbton |
|---|---|---|---|---|---|---|
| 139 | 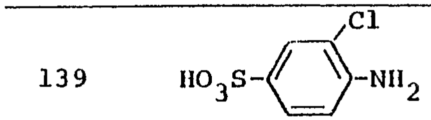 | $CH_3$ | H | $C_2H_5$ | $C_6H_5$ | gelbst. Orange |
| 140 | 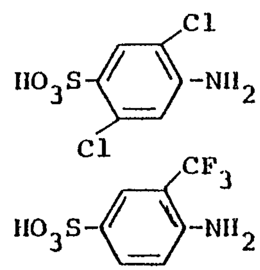 | $CH_3$ | H | $C_2H_5$ | $C_6H_5$ | gelbst. Orange |
| 141 | | $CH_3$ | H | $C_2H_5$ | $C_6H_5$ | gelbst. Orange |
| 142 | 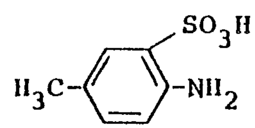 | $CH_3$ | H | $C_2H_5$ | $C_6H_5$ | Gelb |
| 143 | 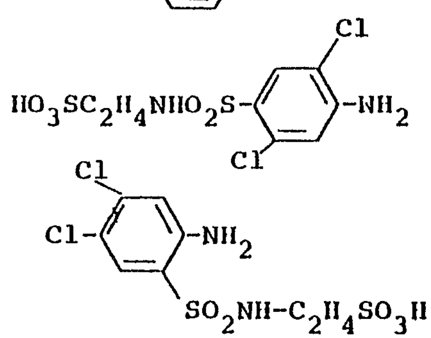 | $CH_3$ | H | H | $C_6H_5$ | gelbst. Rot |
| 144 | | $CH_3$ | H | H | $C_6H_5$ | gelbst. Rot |

**Patentansprüche**

1. Azofarbstoffe der Formel

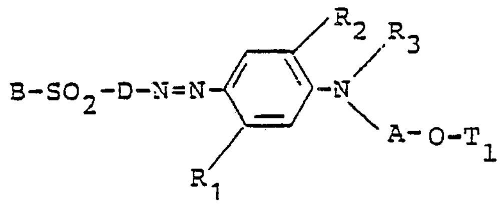

(I)

worin

A einen Alkylenrest,

B einen Rest der Formeln —OH, —$NHSO_2R$ oder

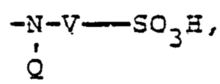

D den Rest einer Diazokomponente der Benzol- oder Naphthalinreihe,

Q Wasserstoff oder einen Alkylrest,

V einen Alkylen- oder Arylenrest,

R einen Alkyl- oder Arylrest,

$T_1$ einen Cycloalkyl-, Aralkyl- oder — vorzugsweise — Arylrest,

$R_1$ Wasserstoff, Halogen, einen Alkyl-, Alkoxy- oder Acylaminorest,

$R_2$ Wasserstoff, Halogen, einen Alkyl-, Alkoxy- oder Aryloxyrest und

$R_3$ Wasserstoff, Alkyl, Cycloalkyl oder Aralkyl

bedeuten, mit der Maßgabe, daß die genannten nicht näher charakterisierten Kohlenwasserstoffreste, insbesondere die Reste $R_3$ und D, weitere in der Chemie der Säurefarbstoffe übliche Substituenten enthalten können.

2. Farbstoffe gemäß Anspruch 1, worin

A $C_2$-$C_4$-Alkylen,

$R_1$ H, $CH_3$, Cl, $NHCOCH_3$ oder $NHSO_2CH_3$,

$R_2$ H, $OCH_3$ oder Cl,

$R_3$ H, $C_1$-$C_4$-Alkyl, $C_2$-$C_4$-Hydroxyalkyl, Cyanethyl $C_2H_4$-O-Q, Benzyl oder Phenethyl,

Q $C_1$-$C_4$-Alkyl, Phenyl oder Cyclohexyl,

$T_1$ Phenyl, Tolyl, Chlorphenyl oder Cyclohexyl,

D gegebenenfalls 1 bis 2 mal durch Cl, $CF_3$, $CH_3$ oder $OCH_3$ substituiertes Phenylen und

B OH oder $NHC_2H_4SO_3H$ bedeuten.

3. Farbstoffe gemäß Anspruch 1, worin

A —$C_2H_4$—,

$R_1$ H oder $CH_3$,

$R_2$ H,

$R_3$ H, $C_2H_5$, $C_2H_4OH$, $C_2H_4CN$, Benzyl, Phenethyl oder $C_2H_4OQ$,

Q $C_1$-$C_4$-Alkyl,

$T_1$ Phenyl oder Cyclohexyl,

D 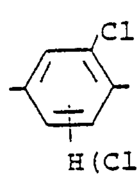 oder 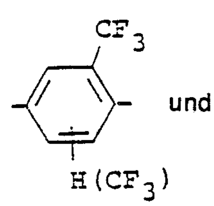 und

B OH oder $NHC_2H_4SO_3H$ bedeuten.

4. Farbstoff gemäß Anspruch 1 der Formel

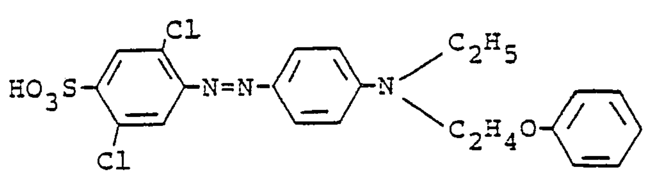

5. Verfahren zur Herstellung von Farbstoffen gemäß Anspruch 1, dadurch gekennzeichnet, daß man diazotierte Amine der Formel

$$B{-}SO_2{-}D{-}NH_2$$

auf Aniline der Formel

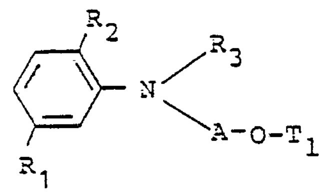

kuppelt.

6. Verfahren zum Färben von Polyamiden, dadurch gekennzeichnet, daß man Farbstoffe gemäß Anspruch 1 verwendet.

**Claims**

1. Azo dyestuffs of the formula

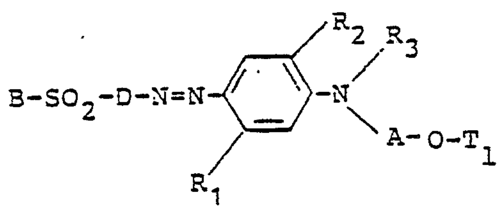

wherein

A denotes an alkylene radical,
B denotes a radical of the formulae —OH, —$NHSO_2R$ or

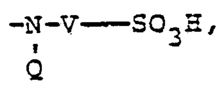

D denotes the radical of a diazo component of the benzene or naphthalene series,
Q denotes hydrogen or an alkyl radical,
V denotes an alkylene or arylene radical,
R denotes an alkyl or aryl radical,
$T_1$ denotes a cycloalkyl, aralkyl or — preferably — aryl radical,
$R_1$ denotes hydrogen, halogen or an alkyl, alkoxy or acylamino radical,
$R_2$ denotes hydrogen, halogen or an alkyl, alkoxy or aryloxy radical and
$R_3$ denotes hydrogen, alkyl, cycloalkyl or aralkyl,

with the proviso that the hydrocarbon radicals mentioned and not characterised in more detail, in particular the radicals $R_3$ and D, can contain further substituents customary in the chemistry of acid dyestuffs.

2. Dyestuffs according to Claim 1, wherein
A denotes $C_2$-$C_4$-alkylene,
$R_1$ denotes H, $CH_3$, Cl, $NHCOCH_3$ or $NHSO_2CH_3$,
$R_2$ denotes H, $OCH_3$ or Cl,
$R_3$ denotes H, $C_1$-$C_4$-alkyl, $C_2$-$C_4$-hydroxyalkyl, cyanoethyl, $C_2H_4$-O-Q, benzyl or phenethyl,
Q denotes $C_1$-$C_4$-alkyl, phenyl or cyclohexyl,
$T_1$ denotes phenyl, tolyl, chlorophenyl or cyclohexyl,
D denotes phenylene optionally mono- to disubstituted by Cl, $CF_3$, $CH_3$ or $OCH_3$ and
B denotes OH or $NHC_2H_4SO_3H$.

3. Dyestuffs according to Claim 1, wherein
A denotes —$C_2H_4$—,
$R_1$ denotes H or $CH_3$,
$R_2$ denotes H,
$R_3$ denotes H, $C_2H_5$, $C_2H_4OH$, $C_2H_4CN$, benzyl, phenethyl or $C_2H_4OQ$,
Q denotes $C_1$-$C_4$-alkyl,
$T_1$ denotes phenyl or cyclohexyl,

D denotes 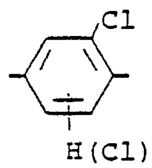 or 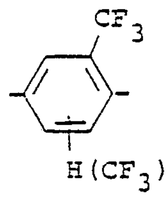 and

B denotes OH or $NHC_2H_4SO_3H$.

4. Dyestuff according to Claim 1 of the formula

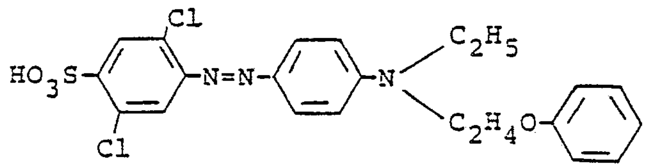

5. Process for the preparation of dyestuffs according to Claim 1, characterised in that diazotised amines of the formula

$$B—SO_2—D—NH_2$$

are coupled onto anilines of the formula

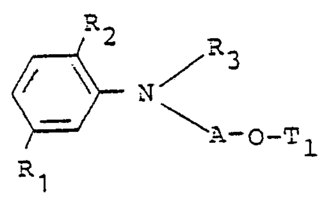

6. Process for dyeing polyamides, characterised in that dyestuffs according to Claim 1 are used.

**Revendications**

1. Colorants azoïques de formule

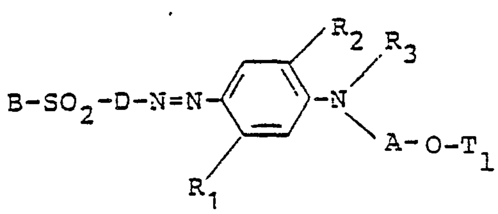

(I)

dans laquelle

A est un reste alkylène,

B est un reste de formule —OH, $—NHSO_2R$ ou

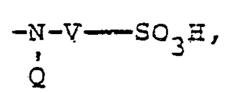

D est le reste d'un composant diazotable de la série du benzène ou du naphtalène,

Q est l'hydrogène ou un reste alkyle,

V est un reste alkylène ou arylène,

R est un reste alkyle ou aryle,

$T_1$ est un reste cycloalkyle, aralkyle ou — de préférence — aryle,

$R_1$ est l'hydrogène, un halogène, un reste alkyle, alkoxy ou acylamino,

$R_2$ est l'hydrogène, un halogène, un reste alkyle, alkoxy ou aryloxy et

$R_3$ est l'hydrogène, un reste alkyle, cycloalkyle ou aralkyle,

sous réserve que les restes hydrocarbonés mentionnés non caractérisés en détail, notamment les restes $R_3$ et D, puissent contenir d'autres substituants classiques dans la chimie des colorants acides.

2. Colorants, suivant la revendication 1, dans lesquels
A est un groupe alkylène en $C_2$ à $C_4$,
$R_1$ représente H, $CH_3$, Cl, $NHCOCH_3$ ou $NHSO_2CH_3$,
$R_2$ représente H, $OCH_3$ ou Cl,
$R_3$ représente H, un groupe alkyle en $C_1$ à $C_4$, hydroxyalkyle en $C_2$ à $C_4$, cyanéthyle, $C_2H_4$-O-Q, benzyle ou phénéthyle,
Q est un groupe alkyle en $C_1$ à $C_4$, phényle ou cyclohexyle,
$T_1$ est un groupe phényle, tolyle, chlorophényle ou cyclohexyle,
D est un groupe phénylène éventuellement substitué une ou deux fois par un substituant Cl, $CF_3$, $CH_3$ ou $OCH_3$ et
B représente OH ou $NHC_2H_4SO_3H$.

3. Colorants suivant la revendication 1, dans lequel :
A est un groupe $—C_2H_4—$,
$R_1$ représente H ou $CH_3$,
$R_2$ représente H,
$R_3$ représente H, ou un groupe $C_2H_5$, $C_2H_4OH$, $C_2H_4CN$, benzyle, phénéthyle ou $C_2H_4OQ$,
Q est un groupe alkyle en $C_1$ à $C_4$,
$T_1$ est un groupe phényle ou cyclohexyle,

D est un groupe 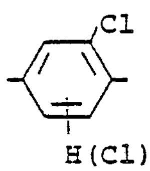 ou 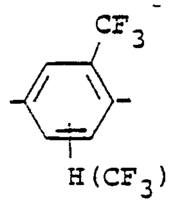 et

B est un groupe OH ou $NHC_2H_4SO_3H$.

4. Colorant suivant la revendication 1, de formule

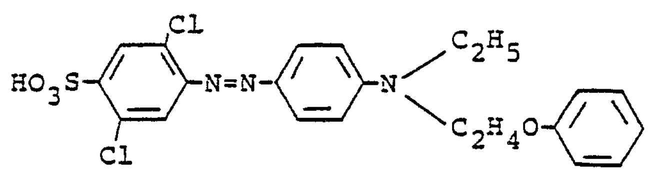

5. Procédé de production de colorants suivant la revendication 1, caractérisé en ce qu'on fait copuler des amines diazotées de formule

$$B—SO_2—D—NH_2$$

sur des anilines de formule

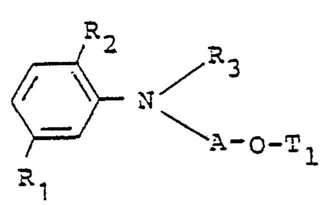

6. Procédé de teinture de polyamides, caractérisé en ce qu'on utilise des colorants suivant la revendication 1.